# EUROPÄISCHE PATENTSCHRIFT

(11) **EP 3 980 659 B1**
(45) Veröffentlichungstag und Bekanntmachung des Hinweises auf die Patenterteilung: **09.07.2025**
(21) Anmeldenummer: 20731408.9
(22) Anmeldetag: 28.05.2020
(51) Int. Cl.: F16D 55/36, F16D 25/0638

(54) **LAMELLENBREMSE FÜR EIN KRAFTFAHRZEUG**
MULTI-DISC BRAKE FOR A VEHICLE
FREIN À MULTIDISQUE POUR VÉHICULE

(30) Priorität: 05.06.2019 DE 102019208178
(43) Veröffentlichungstag der Anmeldung: 13.04.2022
(73) Patentinhaber: Continental Automotive Technologies GmbH, 30175 Hannover (DE)
(72) Erfinder: BACH, Uwe, 60488 Frankfurt am Main (DE); HOFFMANN, Jens, 60488 Frankfurt am Main (DE); GÄDKE, Martin, 60488 Frankfurt am Main (DE); SCHULITZ, Matthias, 60488 Frankfurt am Main (DE); SEFO, Ahmed, 60488 Frankfurt am Main (DE); MESSNER, Adrian, 60488 Frankfurt am Main (DE)
(74) Vertreter: Continental Corporation
(86) Internationale Anmeldenummer: PCT/EP2020/064804
(87) Internationale Veröffentlichungsnummer: WO 2020/245021

(56) Entgegenhaltungen:
- EP-A1- 1 000 829
- DE-A1- 102016 211 961
- DE-A1- 102017 200 399
- DE-A1- 4 224 378

## Beschreibung

Die Erfindung betrifft eine Lamellenbremse für ein Kraftfahrzeug mit einer drehbaren Antriebswelle und mit einer in Relation zur Antriebswelle feststehenden Führungseinrichtung. Die Lamellenbremse umfasst eine Lamellenanordnung, weiterhin umfassend abwechselnd angeordnete Belagscheiben und Zwischenscheiben, wobei die Belagscheiben drehfest mit der Antriebswelle oder der Führungseinrichtung und die Zwischenscheiben drehfest mit dem jeweils anderen Bauteil der Führungseinrichtung oder der Antriebswelle verbunden sind, und mit einer Betätigungseinrichtung mit Rampeneinheit zum Vorspannen(Betätigen) und/oder Lösen der Lamellenanordnung sowie mit einer Stellvorrichtung/Aktor als Stellantrieb der Betätigungseinrichtung (Bremsbetätigen und/oder Bremslösen) nach den Merkmalen des Oberbegriffs des Patentanspruchs 1.

Nasslaufende Lamellenbremsen werden in Landmaschinen und Flurförderfahrzeugen eingesetzt und sind aus der Praxis bekannt. Eine Lamellenbremse zeichnet sich prinzipiell durch einen sehr hohen Bremsenkennwert C*, einen konstanten Belagreibwert und eine gekapselte Bauweise aus. In der Regel ist eine Bremslamellenanordnung in einem Ölbad angeordnet, so dass beim Bremsen entstehende Wärme einfach abgeführt werden kann und zudem kein Bremsabrieb in die Umgebung gelangt. Zudem lässt sich eine solche Lamellenbremse einfach in einen Antriebsstrang integrieren und durch die Größe und Anzahl der Belagscheiben und Zwischenscheiben einfach skalieren.

Aus der DE 10 2016 211 961 A1 geht eine fluidisch gekühlte Multilamellenbremse für elektromotorische Radantriebe eines Flurförderfahrzeugs hervor. Die Multilamellenbremse ist in einem Zentralgehäuse zwischen einem rechten und einem linken elektromotorischen Radantrieb mittig platziert. Zentral d.h. mittig zwischen einem linken Lamellenpaket und einem rechten Lamellenpaket ist die als Kugelrampenaktuator ausgebildete Bremsbetätigung vorgesehen. Die Betätigung ist im Wesentlichen vom Außenlamellenträger, radial, aufgenommen. Die Betätigung der Lamellenbremse umfasst einen elastisch vorgespannten Federspeicher, welcher gemeinsam mit einem Betätigungselement angebaut ist.

Bei bekannten Lamellenbremsen wird der Aktor über ein Betätigungsorgan/Betätigungshebel mittelbar angesteuert. Bei einem Einsatz einer Lamellenbremse in einem Personenkraftwagen besteht das Bedürfnis die Bremsleistung besonders genau dosieren zu können.

Die DE 42 24 378 A1 beschreibt eine multilamellare Kupplungseinheit oder eine Bremseinheit mit Gehäuse und Nabe. Die Einheit schließt jeweils eine Betätigungsaktuatorik ohne Rampe ein. Ein besonderer Verschleißnachstellmechanismus ist vorgesehen, wobei keine dosierbare Bremse definiert ist, weil die beschriebene Aktuatorik nur die Umschaltung zwischen einer Eingriffstellung und einer Trennstellung ermöglicht (on/off). In diesem Kontext wird vorgeschlagen, Lamellenverschleiß auszugleichen, indem ein besonderer Verschleißnachstellmechanismus vorgesehen ist, der die Bremsbetätigungseinrichtung in Richtung auf die Lamellen vorschieben kann, und wobei der Nachstellmechanismus als Widerlager gegen Rückverlagerung dient.

Der Erfindung liegt das Problem zugrunde, eine Lamellenbremse so weiter zu bilden, dass sie insbesondere in einem elektronischen Kraftfahrzeugbremssystem, das zusätzlich oder gesondert eine oder mehrere elektrische und/oder hydraulische Radbremsen und/oder mehrere Antriebsstränge, wie insbesondere ein Rekuperativbremssystem beinhalten kann, dennoch einfach ansteuerbar ist, so dass eine Bremsleistung, wie insbesondere eine Summenbremsleistung sämtlicher Bremsen bzw. Komponenten in Kooperation effizient gebaut und einfach dosierbar ist.

Das Problem wird erfindungsgemäß anhand der kennzeichnenden Merkmale des Patentanspruchs 1 gelöst. Demnach ist die Führungseinrichtung mit einem Gehäuse drehfest verbunden, und fluidische Kühlung der Lamellenbremse ist ermöglicht indem das Gehäuse zu einem Getriebe des Kraftfahrzeuges hin offen gestaltet ist, weil das Fahrzeuggetriebe, welches bei Kraftfahrzeugen ohnehin eine Ölschmierung hat, mit dem Öl des Getriebes zur Kühlung der Lamellenbremse vorgesehen ist. Hierdurch ist die Lamellenbremse besonders für den Einsatz im Kraftfahrzeug geeignet.

Durch die erfindungsgemäße Gestaltung lässt sich die Zuspannkraft bzw. Bremsleistung anhand einer elektrischen Steuerung besonders feinfühlig wie auch präzise dosieren. Weiterhin vermag ein solcher elektrischer Antrieb - insbesondere reversierbarer Drehantrieb - eine Betätigungseinrichtung/Rampeneinheit in beide Richtungen effizient anzutreiben. Es ist ermöglicht, richtungsabhängige Verstärkungs- oder Löseeffekte einer keilartigen Rampenvorrichtung auszugleichen bzw. zu kompensieren. Der elektrische Antrieb der Betätigungseinrichtung in beide Richtungen (Bremsbetätigen und/oder Bremslösen) ermöglicht bei einer Rückwärtsfahrt wie auch bei einer Vorwärtsfahrt eine konstante bzw. geregelte Bremsleistung nach Wunsch mit bzw. ohne die o.g. Kompensationsmaßnahme. Zudem ist der elektrisch-regelungstechnische Einbezug peripherer Systeme und Komponenten bei moderner Fahrzeugtopologie in erweitertem Umfang ermöglicht (Brems-Kooperation und Bremseinbezug in einem Hybridisierten Antriebsstrang mit integrierter rekuperativer Bremse. Das Lösen der Lamellenbremse erfolgt durch Antrieb der Stellvorrichtung in die Bremslöse-richtung bei gleichzeitiger entsprechender Rückstellung der Lamellenanordnungen anhand von wenigstens einer Rückholfeder.

Zur Vereinfachung der Dosierung der Bremsleistung trägt es gemäß einer anderen vorteilhaften Weiterbildung der Erfindung bei, wenn der elektrische Antrieb als Elektromotor mit einem von dem Elektromotor antreibbaren, schwenkbar gelagerten Ritzel vorliegt, und wobei das Ritzel ein Hebelelement oder Nockenelement haltert. Ist das Hebelelement oder Nockenelement symmetrisch gestaltet, kann bei Vorwärts- und Rückwärtsfahrt das gleiche Bremsmoment erzeugt werden. Eine asymmetrische Nocke ermöglicht die Anpassung des Bremsmoments an unterschiedliche Anforderungen bei Rückwärtsfahrt und Vorwärtsfahrt.

In weiterhin besonderer Konkretisierung einer bevorzugten Ausgestaltung von der vorliegenden Erfindung ist die Betätigungseinrichtung gewissermaßen als Keilgetriebe, das heisst als eine Rampenvorrichtung/Rampen(bau)einheit ausgestaltet, und in diesem Zusammenhang vermag die Stellvorrichtung/Aktor/elektrischer Antrieb diese Rampeneinheit zwecks Bremskraftregelung/Bremskraftsteuerung noch präziser sowie effizient und reversierbar in beide Richtungen (Bremsbetätigen oder Bremslösen) anzutreiben. Der demzufolge entsprechend weiterentwickelt feinfühlig sowie schnell gesteuerte bzw. geregelte Antrieb der Rampeneinheit in sämtliche Richtungen ermöglicht insbesondere sowohl bei einer Rückwärtsfahrtrichtung wie auch in Vorwärtsfahrtrichtung eine regulierte bzw. Bremsleistung und/oder konstant gestaltetes Bremsbetätigungsgefühl. Mit anderen Worten besteht eine weitere vorteilhafte Wirkung dieser verbesserten Ausgestaltung darin, dass bei geringem Stellweg insbesondere regelungstechnisch sehr feinfühlig übersetzte und schnelle bzw. translatorisch umgewandelte Stelleingriffe an der Betätigungsvorrichtung/Rampenvorrichtung ermöglicht sind. Das Lösen der Lamellenbremse erfolgt durch eine Rückstellung der Lamellenanordnung mit Hilfe von einer oder mehrerer Rückholfeder(n), und wobei die Stellvorrichtung die Betätigungsvorrichtung/Rampeneinheit in die Löserichtung betätigt.

Reibungsverluste beim Betätigen der Lamellenbremse lassen sich gemäß einer anderen vorteilhaften Weiterbildung der Erfindung besonders gering halten, wenn das Hebelelement ein Wälzlager hat und dass das Wälzlager einem Steuerarm der Rampeneinheit gegenübersteht. Das Wälzlager erhöht durch eine Verringerung der Reibung zwischen Hebelelement und Rampeneinheit den Wirkungsgrad der Lamellenbremse und verringert eine Hysterese.

Die Lamellenbremse gestaltet sich gemäß einer anderen vorteilhaften Weiterbildung der Erfindung besonders kompakt, wenn das Ritzel als Zahnsegment ausgebildet ist.

Eine bei Kraftfahrzeugen übliche Parkbremse lässt sich gemäß einer anderen vorteilhaften Weiterbildung der Erfindung einfach erzeugen, wenn der elektrische Antrieb eine ansteuerbare Parkbremseinrichtung hat und dass die Parkbremseinrichtung die Rampeneinheit in der von dem Aktor eingestellten Stellung wahlweise blockiert oder freigibt. Diese Parkbremseinrichtung weist vorzugsweise einen Elektromagneten auf, welcher das Ritzel in seiner Lage hält oder dessen Bewegung freigibt.

Die Parkbremseinrichtung gestaltet sich gemäß einer anderen vorteilhaften Weiterbildung der Erfindung konstruktiv besonders einfach, wenn die Parkbremseinrichtung ein elektromagnetisch ansteuerbares Klinkenrad hat und dass das Klinkenrad zur wahlweisen Blockierung oder Freigabe mit dem Ritzel oder dem elektrischen Antrieb in Eingriff steht.

Die Ansteuerung der Rampeneinheit gestaltet sich gemäß einer anderen vorteilhaften Weiterbildung der Erfindung konstruktiv besonders einfach, wenn die Rampeneinheit eine drehbare, an dem Lamellenpaket abstützende Rampenscheibe hat, dass die Rampenscheibe bei einer Verdrehung in axialer Richtung verlagerbar ist und dass der Aktor zur Verdrehung der Rampenscheibe ausgebildet ist.

Eine Selbstverstärkung der Bremsleistung der Lamellenbremse lässt sich gemäß einer anderen vorteilhaften Weiterbildung der Erfindung bei einer Vorwärts- oder Rückwärtsfahrt gleichermaßen erzeugen, wenn die Rampeneinheit zwei zwischen zwei Lamellenanordnungen angeordnete Rampenscheiben hat und wenn die eine Rampenscheibe in die eine Richtung und die andere Rampenscheibe in die andere Richtung zur Verlagerung in die axiale Richtung antreibbar ist. Durch diese Gestaltung kann in Abhängigkeit von der Drehrichtung der Welle die für die Selbstverstärkung der Lamellenbremse notwendige Rampenscheibe ausgewählt und im gleichen Drehsinne wie die angrenzende Scheibe der Lamellenanordnung verdreht werden. Diese Selbstverstärkung führt zu einem ansteigenden Bremsmoment und damit zu einem ansteigenden Bremsenkennwert C*, wodurch die erforderliche Betätigungskraft gesenkt werden kann.

Der wahlweise Antrieb der einen oder der anderen Rampenscheibe in Abhängigkeit von der Antriebsrichtung des elektrischen Antriebs gestaltet sich gemäß einer anderen vorteilhaften Weiterbildung der Erfindung besonders einfach, wenn die Rampenscheiben jeweils einen Steuerarm aufweisen, dass das Hebelelement zwischen den Steuerarmen angeordnet ist und dass die Rampenscheiben der Führungseinrichtung mit Abstand gegenüberstehende Stützarme aufweisen.

Reibungsverluste der Rampeneinheit lassen sich gemäß einer anderen vorteilhaften Weiterbildung der Erfindung besonders gering halten, wenn die Rampenscheibe sich verjüngende Nuten zur teilweisen Aufnahme von Kugeln hat. Durch diese Gestaltung rollen die Kugeln auf den Rändern der sich verjüngenden Nuten ab und stehen in Abhängigkeit von der Drehstellung der Rampenscheibe unterschiedlich hervor. Hierdurch wird die axiale Verschiebung der Rampenscheibe erzeugt.

Die Lamellenbremse lässt sich gemäß einer anderen vorteilhaften Weiterbildung der Erfindung besonders kostengünstig fertigen, wenn die Führungseinrichtung in dem Gehäuse befestigte Führungsbolzen hat.

Die Erzeugung eines vorgesehenen Bremsmoments bei Vorwärtsfahrt und Rückwärtsfahrt gestaltet sich gemäß einer anderen vorteilhaften Weiterbildung der Erfindung besonders einfach, wenn der Aktor in Abhängigkeit von der Drehrichtung der Antriebswelle ansteuerbar ist. Damit kann in der einen Drehrichtung der Antriebswelle die eine Rampenscheibe verdreht und in der anderen Drehrichtung die andere Rampenscheibe verdreht werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Frontansicht auf eine an einem Getriebe befestigte Lamellenbremse,
- Fig.2: eine Draufsicht auf die Lamellenbremse aus Figur 1,
- Fig.3: eine Schnittdarstellung durch die Lamellenbremse aus Figur 1 entlang der Linie III - III,
- Fig.4: eine Schnittdarstellung durch die Lamellenbremse aus Figur 2 entlang der Linie IV - IV,
- Fig.5: eine Explosionsdarstellung einiger Bauteile der Lamellenbremse aus Figur 1, und
- Fig. 6: eine prinzipielle Systemskizze.

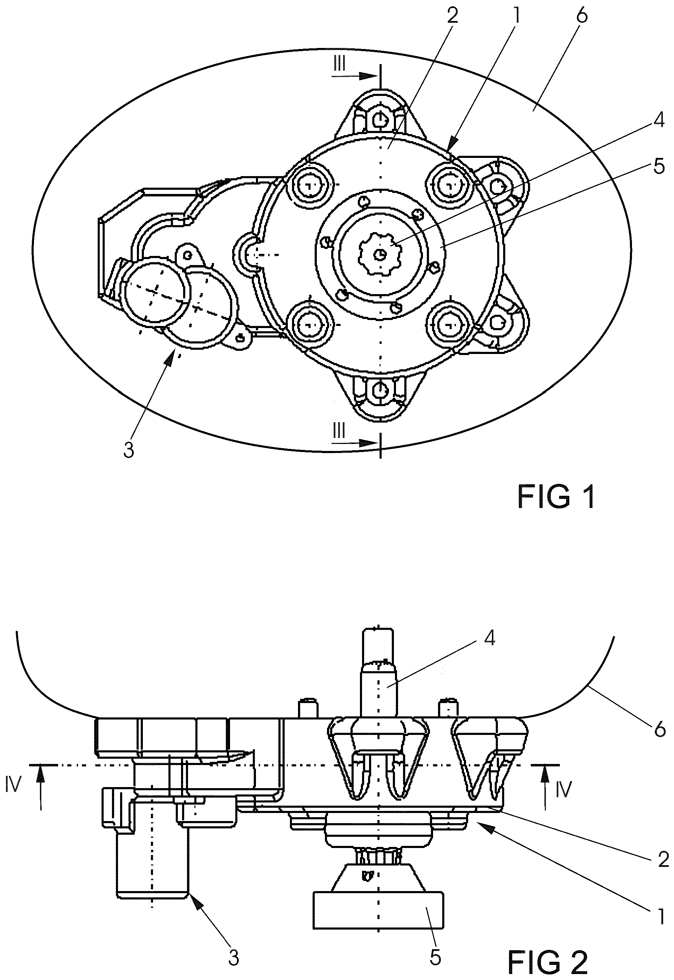

Figur 1 zeigt eine Lamellenbremse 1 mit einem Gehäuse 2, mit einer Stellvorrichtung, d.h. einem Aktor 3 als Stellvorrichtung und mit einem drehfest auf einer Antriebswelle 4 angeordneten Flansch 5 zur Anbindung eines nicht dargestellten Antriebsstrangs eines Kraftfahrzeuges. Das Gehäuse 2 der Lamellenbremse 1 ist an einem schematisch dargestellten Getriebe 6 eines Kraftfahrzeuges befestigt.

Figur 2 zeigt die Lamellenbremse 1 aus Figur 1 in einer Draufsicht mit einem Teilbereich des Getriebes 6. Die Antriebswelle 4 lässt sich mit einer nicht dargestellten Getriebeausgangswelle des Getriebes 6 verbinden. Das Gehäuse 2 der Lamellenbremse 1 ist zum Getriebe 6 hin offen, so dass ein Schmiermittelkreislauf des Getriebes 6 in die Lamellenbremse 1 gelangt und diese schmiert und kühlt.

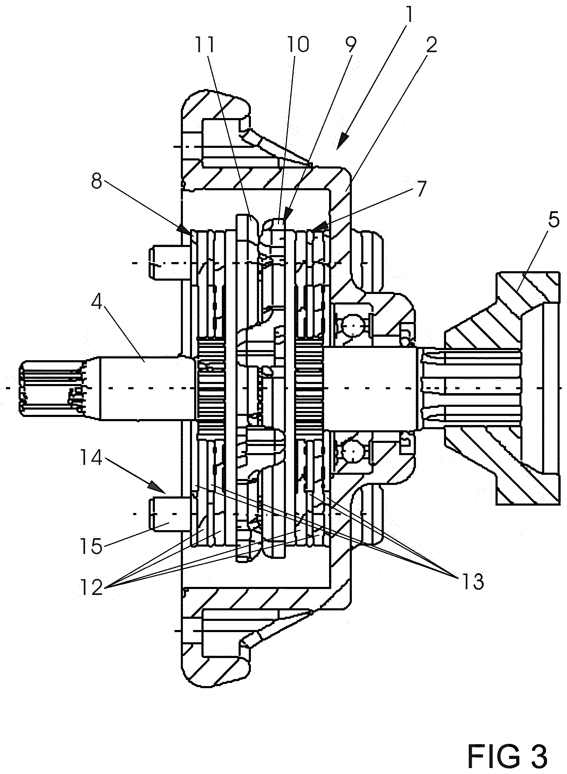

Figur 3 zeigt in einer Schnittdarstellung durch die Lamellenbremse 1 aus Figur 1 entlang der Linie III - III, dass die Lamellenbremse 1 zwei Lamellenanordnungen 7, 8 und zwischen den Lamellenanordnungen 7, 8 eine Betätigungseinrichtung in Ausgestaltung als Rampeneinheit 9 mit zwei Rampenscheiben 10, 11 hat. Die Lamellenanordnungen 7, 8 weisen abwechselnd Belagscheiben 12 und Zwischenscheiben 13 auf. Die Belagscheiben 12 sind drehfest und axial verschieblich auf der Antriebswelle 4 angeordnet, während die Zwischenscheiben 13 drehfest und axial verschieblich auf einer Führungseinrichtung 14 angeordnet sind. Die Führungseinrichtung 14 hat in dem Gehäuse 2 befestigte Führungsbolzen 15. Die axiale Beweglichkeit der Belagscheiben 12 und der Zwischenscheiben 13 wird von dem Gehäuse 2 und der Führungseinrichtung 14 begrenzt.

Beim Bremsvorgang werden die Rampenscheiben 10, 11 dieser bevorzugten Betätigungseinrichtung relativ zueinander verdreht. Dabei bewegen sich die Rampenscheiben 10, 11 axial auseinander und pressen die Lamellenanordnungen 7, 8 zusammen. Diese verursachen einen Reibschluss zwischen der von dem Getriebe 6 drehbaren Antriebswelle 4 und der mit dem Gehäuse 2 feststehenden Führungseinrichtung 14.

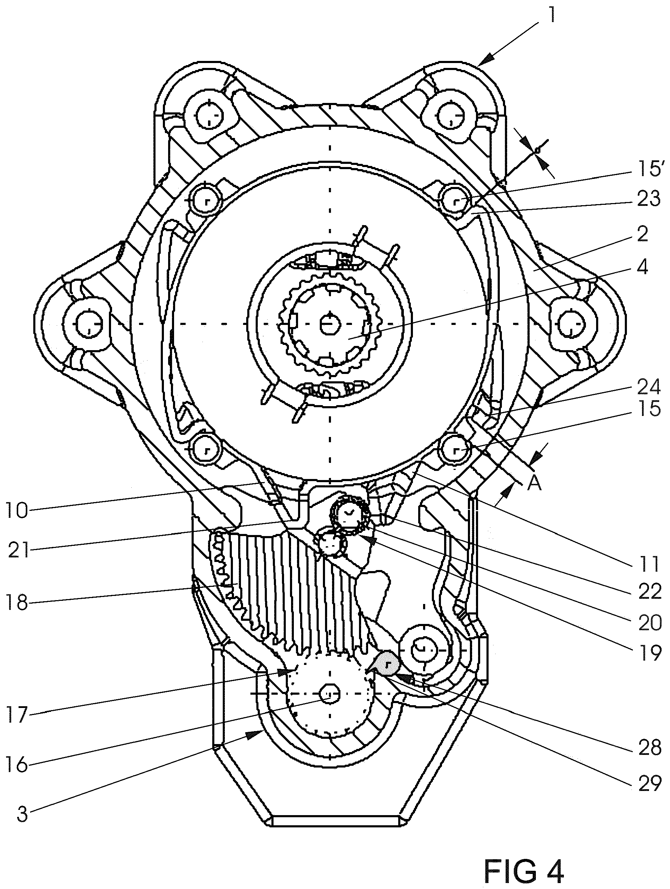

Figur 4 zeigt in einer Schnittdarstellung entlang der Linie IV - IV aus Figur 2 durch den mittleren Bereich der Lamellenbremse 1 die Anbindung der Stellvorrichtung/des Aktors 3 an die Betätigungseinrichtung/Rampeneinheit 9. Die Stellvorrichtung/der Aktor 3 hat einen elektrischen Antrieb 16 mit einem Aktorgetriebe 17. Das Aktorgetriebe 17 hat ein als Zahnsegment ausgebildetes Ritzel 18 mit einem Hebelelement 19. Das Hebelelement 19 trägt ein Wälzlager 20 und ist zwischen Steuerarmen 21, 22 der beiden Rampenscheiben 10, 11 angeordnet. Weiterhin haben die Rampenscheiben 10, 11 Stützarme 23, 24, mit denen sie den Führungsbolzen 15 gegenüberstehen. Beim Antrieb des Ritzels 18 durch den elektrischen Antrieb 16 wird das Hebelelement 19 zu einem der Steuerarme 22 ausgelenkt, wodurch die zugehörige Rampenscheibe 11 verdreht wird. Der Stützarm 24 dieser Rampenscheibe 11 hat hierdurch einen großen Abstand A zu dem nächsten Führungsbolzen 15. Die andere Rampenscheibe 10 stützt sich dabei mit dem Stützarm 23 an dem nächsten Führungsbolzen 15' ab.

In einer nicht dargestellten weiteren Ausführungsform ist das Hebelelement 19 als Steuernocken ausgebildet und auf einer Drehachse des Ritzels 18 angeordnet.

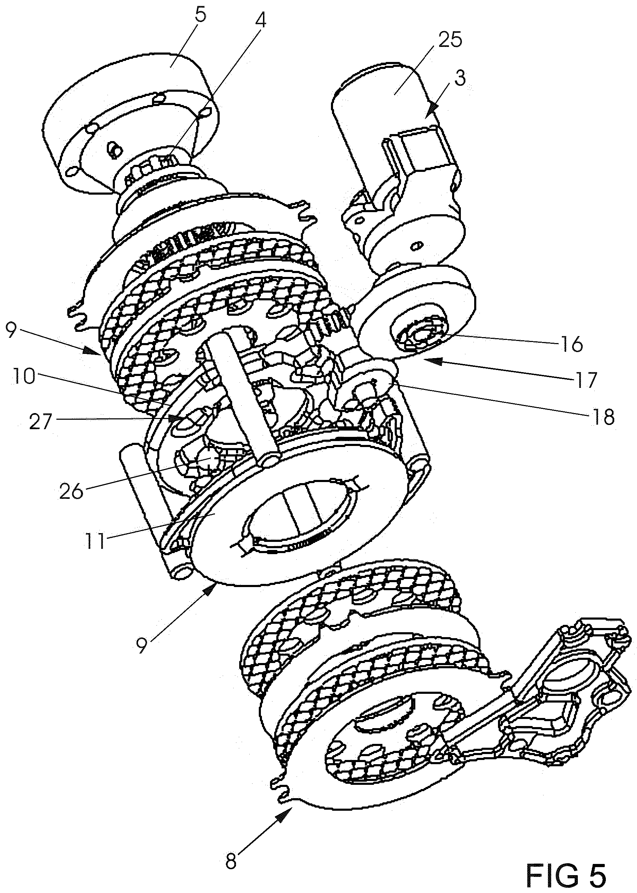

Figur 5 zeigt in einer Explosionsdarstellung einige Bauteile der Lamellenbremse 1. Hierbei ist zu erkennen, dass die elektrische Stelleinrichtung/elektrische Antrieb einen Elektromotor 25 hat. Das Aktorgetriebe 17 ist zwischen dem Elektromotor 25 und dem das Hebelelement 19 aufweisenden Ritzel 18 angeordnet. Zwischen den Rampenscheiben 10, 11 sind Kugeln 26 angeordnet, welche in sich verjüngenden Nuten 27 der Rampenscheiben 10, 11 geführt sind. Die Nuten 27 sind tangential zur Drehrichtung der Rampenscheiben 10, 11 ausgerichtet. Durch die Verjüngung werden die Kugeln 26 in Abhängigkeit von der Drehstellung der Rampenscheiben 10, 11 zueinander axial hervorbewegt und damit die Rampenscheiben 10, 11 gespreizt.

Rückholfedern zum Lösen der Vorspannung/Betätigung der Lamellenanordnungen 7,8 bei stromlosem Aktor 3 sind zur Vereinfachung der Zeichnung nicht dargestellt. Solche Rückholfedern sind an den Rampenscheiben 10, 11 befestigt und drücken diese Rampenscheiben 10, 11 gegen die dazwischen angeordneten Kugeln 26 vor.

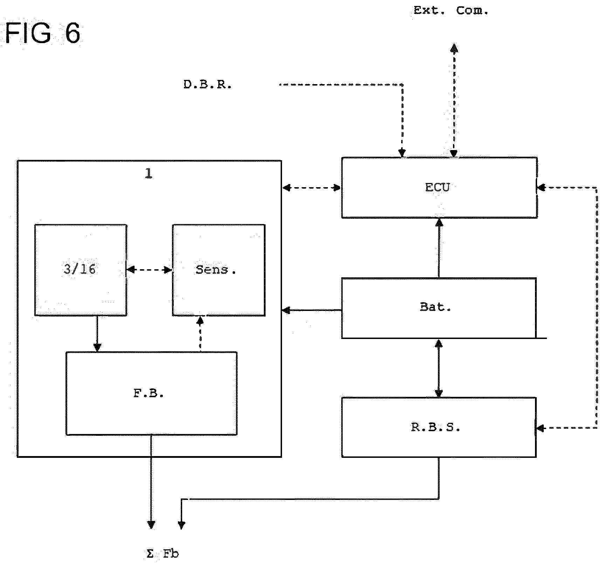

Anhand Fig. 6 ergeht ein hinreichend selbsterklärender, prinzipieller, sowie bevorzugter Brems- + Antriebsstrang-Systemzusammenhang in Bezug auf die Mechatronikanlage, welche die vorliegende Erfindung besonders vorteilhaft inkorporiert. Dabei kooperieren und kommuniziert Reibungsbremse F.B in Gestalt der (Multi-)Lamellenbremse 1 mit einem rekuperativ agierenden Antrieb(brems)strang (R.B.S) zwecks Erzeugung einer summarischen Bremskraftwirkung ΣFb, welche sich additiv aus einem Reibungsbremskraftanteil und aus einem rekuperativen (Antriebs-)Bremskraftanteil zusammensetzt. Nur zwecks Klarstellung ist weiterhin hinzuzufügen dass eine elektromechanisch betätigbare (Multi-)Lamellenbremse, wie diese anhand von Fig. 1 - 5 als bevorzugter Lösungsvorschlag konstruktiv beispielhaft verdeutlicht ist, prinzipiell keine implizite Lösefunktionalität beinhalten soll oder muss. Denn eine Multilamellenbremse ist nicht ohne weiteres automatisch in die Lage versetzt, nach einer Bremsbetätigung selbsttätig bzw. stromlos, zu lösen. Vielmehr ist es erfindungsgemäß primär vorgesehen, dass eine Lösekraft von extern, gesondert, anhand von einer oder mehrerer vorgespannter Rückholfedern aufgeprägt ist. Demzufolge liegt erfindungsgemäß keineswegs zwingend eine starre Kopplung in Bremslöse-Richtung zwischen Rampenscheibe 10,11 und Antrieb 16 vor.
1 Lamellenbremse
2 Gehäuse
3 Aktor
4 Antriebswelle
5 Flansch
6 Getriebe
7 Lamellenanordnung
8 Lamellenanordnung
9 Rampeneinheit
10 Rampenscheibe
11 Rampenscheibe
12 Belagscheibe
13 Zwischenscheibe
14 Führungseinrichtung
15 Führungsbolzen
16 elektr. Antrieb
17 Aktorgetriebe
18 Ritzel
19 Hebelgetriebe
20 Wälzlager
21 Steuerarm
22 Steuerarm
23 Stützarm
24 Stützarm
25 Elektromotor
26 Kugel
27 Nut

Bat. Stromversorgung (e.g. Akkumulator/Batterie/PowerCap)
D.B.R. (Driver Brake Request) = Fahrer-Bremsbetätigung/Bremslösen
ECU elektronische (Brems-)Steuereinheit Ext. Com. systemüberschreitende, externe Kommunikation/Datenbus
F.B. Reibungsbremse
R.B.S. rekuperatives (Antriebs-)/Bremssystem S (Brems-)Lastmesseinrichtung
ΣFb Summarische Bremskraft
- - - - Signalfluss
   Energiefluss

## Patentansprüche

1. Lamellenbremse (1) für ein Kraftfahrzeug mit einer drehbaren Antriebswelle (4) und mit einer in Relation zu der Antriebswelle (4) feststehenden Führungseinrichtung (14), mit einer Lamellenanordnung/Lamellenpaket (7, 8), umfassend abwechselnd angeordnete Belagscheiben (12) und mit Zwischenscheiben (13), wobei die Belagscheiben (12) drehfest mit der Antriebswelle (4) oder der Führungseinrichtung (14) und die Zwischenscheiben (13) drehfest mit dem jeweils anderen Bauteil der Führungseinrichtung (14) oder der Antriebswelle (4) verbunden sind, weiterhin umfassend eine Betätigungseinrichtung, nämlich eine Rampeneinheit (9) zwecks Betätigung/Vorspannung der Lamellenanordnung/Lamellenpaket (7, 8) sowie mit einer Stellvorrichtung/Aktor (3) zum Betätigen und/oder Lösen der Betätigungseinrichtung (9), wobei die Stellvorrichtung/Aktor (3) einen elektrischen Antrieb (16) aufweist, **dadurch gekennzeichnet, dass** die Führungseinrichtung (14) mit einem Gehäuse (2) derart drehfest verbunden ist, und dass das Gehäuse (2) zu einem Getriebe (6) des Kraftfahrzeuges hin offen gestaltet ist, so dass Ölschmierung des Getriebe (6) zur Kühlung der Lamellenbremse (1) vorgesehen ist.

2. Lamellenbremse nach Anspruch 1, **dadurch gekennzeichnet, dass** der elektrische Antrieb (16) als drehrichtungsumkehrbarer Drehantrieb mit einer rotierenden Welle ausgebildet ist.

3. Lamellenbremse nach Anspruch 1 oder 2, **dadurch gekennzeichnet, dass** der elektrische Antrieb (16) einen Elektromotor (25) mit einem von dem Elektromotor (25) antreibbaren, schwenkbar gelagerten Ritzel (18) hat und das Ritzel (18) ein Hebelelement (19) oder ein Nockenelement haltert.

4. Lamellenbremse nach Anspruch 3, **dadurch gekennzeichnet, dass** das Hebelelement (19) ein Wälzlager (20) hat und dass das Wälzlager (20) einem Steuerarm (21, 22) der Rampeneinheit (9) gegenübersteht.

5. Lamellenbremse nach Anspruch 3 oder 4, **dadurch gekennzeichnet, dass** das Ritzel (18) als Zahnsegment ausgebildet ist.

6. Lamellenbremse nach einem oder mehreren der Ansprüche 1 bis 5, **dadurch gekennzeichnet, dass** der elektrische Antrieb (16) eine ansteuerbare Parkbremseinrichtung (28) hat und dass die Parkbremseinrichtung (28) die Betätigungseinrichtung, wie insbesondere eine Rampeneinheit (9), in der von dem Aktor (3) eingestellten Stellung wahlweise blockiert oder freigibt.

7. Lamellenbremse nach Anspruch 6, **dadurch ge-** k**ennzeichnet**, dass die Parkbremseinrichtung (28) ein elektromagnetisch ansteuerbares Klinkenrad (29) hat und dass das Klinkenrad (29) mit dem elektrischen Antrieb (16) in Eingriff steht.

8. Lamellenbremse nach Anspruch 3 und 6, **dadurch gekennzeichnet, dass** die Parkbremseinrichtung (28) ein elektromagnetisch ansteuerbares Klinkenrad (29) hat und dass das Klinkenrad (29) mit dem Ritzel (18) in Eingriff steht.

9. Lamellenbremse nach einem oder mehreren der Ansprüche 1 bis 8, **dadurch gekennzeichnet, dass** die Betätigungseinrichtung als Rampeneinheit (9) ausgebildet vorliegt, und eine drehbare, an dem Lamellenpaket (7, 8) abstützende Rampenscheibe (10, 11) hat, dass die Rampenscheibe (10, 11) bei einer Verdrehung in Abhängigkeit von der Drehstellung in axialer Richtung verlagerbar ist und dass der Aktor (3) zur Verdrehung der Rampenscheibe (10, 11) ausgebildet ist.

10. Lamellenbremse nach Anspruch 9, **dadurchge** - **kennzeichnet**, dass die Rampeneinheit (9) zwei zwischen zwei Lamellenpaketen (7, 8) angeordnete Rampenscheiben (10, 11) hat und dass die eine Rampenscheibe (10) in die eine Richtung und die andere Rampenscheibe (11) in die andere Richtung zur Verlagerung in die axiale Richtung antreibbar ist.

11. Lamellenbremse nach Anspruch 3 + 10, **dadurch gekennzeichnet, dass** die Rampenscheiben (10, 11) jeweils einen Steuerarm (21, 22) aufweisen, dass das Hebelelement (19) zwischen den Steuerarmen (21 ,22) angeordnet ist und dass die Rampenscheiben (10, 11) mit Abstand gegenüberstehende Stützarme (23, 24) aufweisen.

12. Lamellenbremse nach einem oder mehreren der Ansprüche 9 bis 11, **dadurch gekennzeichnet, dass** die Rampenscheibe (10, 11) sich verjüngende Nuten (27) zur teilweisen Aufnahme von Kugeln (26) hat.

13. Lamellenbremse nach einem oder mehreren der Ansprüche 1 bis 12, **dadurch gekennzeichnet, dass** die Führungseinrichtung (14) in dem Gehäuse (2) befestigte Führungsbolzen (15) hat.

14. Lamellenbremse nach einem oder mehreren der Ansprüche 1 bis 13, **dadurch gekennzeichnet, dass** die Stellvorrichtung/der Aktor (3) in Abhängigkeit von der Drehrichtung der Antriebswelle (4) ansteuerbar ist.

## Claims

1. Multi-disk brake (1) for a motor vehicle with a rotatable drive shaft (4) and with a guide device (14) fixed in relation to the drive shaft (4), with a multi-disk arrangement/multi-disk pack (7, 8) comprising alternately arranged lining disks (12) and with intermediate disks (13), wherein the lining disks (12) are non-rotatably connected to the drive shaft (4) or to the guide device (14) and the intermediate disks (13) are non-rotatably connected to the respective other component of the guide device (14) or the drive shaft (4), further comprising an actuation device, specifically a ramp unit (9), for the purpose of actuating/pretensioning the multi-disk arrangement/multi-disk pack (7, 8) and with an actuating mechanism/actuator (3) for actuating and/or releasing the actuating device (9), wherein the actuating mechanism/actuator (3) has an electric drive (16), **characterized in that** the guide device (14) is non-rotatably connected to a housing (2) in such a manner, and **in that** the housing (2) is designed to be open toward a transmission (6) of the motor vehicle in such a way, that oil lubrication of the transmission (6) is provided for cooling the multi-disk brake (1).

2. Multi-disk brake according to Claim 1, **characterized in that** the electric drive (16) is designed as a rotationally reversible rotary drive with a rotating shaft.

3. Multi-disk brake according to Claim 1 or 2, **characterized in that** the electric drive (16) has an electric motor (25) with a pivotably mounted pinion (18) which can be driven by the electric motor (25,) and the pinion (18) supports a lever element (19) or a cam element.

4. Multi-disk brake according to Claim 3, **characterized in that** the lever element (19) has a roller bearing (20), and **in that** the roller bearing (20) faces a control arm (21, 22) of the ramp unit (9).

5. Multi-disk brake according to Claim 3 or 4, **characterized in that** the pinion (18) is designed as a toothed segment.

6. Multi-disk brake according to one or a plurality of Claims 1 to 5, **characterized in that** the electric drive (16) has an activatable parking brake device (28), and **in that** the parking brake device (28) either blocks or releases the actuation device, such as in particular a ramp unit (9), in the position set by the actuator (3).

7. Multi-disk brake according to Claim 6, **characterized in that** the parking brake device (28) has an electromagnetically activatable ratchet wheel (29), and **in that** the ratchet wheel (29) meshes with the electric drive (16).

8. Multi-disk brake according to Claims 3 and 6, **characterized in that** the parking brake device (28) has an electromagnetically activatable ratchet wheel (29), and **in that** the ratchet wheel (29) meshes with the pinion (18).

9. Multi-disk brake according to one or a plurality of Claims 1 to 8, **characterized in that** the actuation device is present in the form of a ramp unit (9) and has a rotatable ramp disk (10, 11) supported on the multi-disk pack (7, 8), **in that** the ramp disk (10, 11) can be displaced in the axial direction upon rotation depending on the rotational position, and **in that** the actuator (3) is designed to rotate the ramp disk (10, 11).

10. Multi-disk brake according to Claim 9, **characterized in that** the ramp unit (9) has two ramp disks (10, 11) arranged between two multi-disk packs (7, 8), and **in that** one ramp disk (10) can be driven in one direction and the other ramp disk (11) in the other direction for the displacement in the axial direction.

11. Multi-disk brake according to Claims 3 and 10, **characterized in that** the ramp disks (10, 11) each have a control arm (21, 22), **in that** the lever element (19) is arranged between the control arms (21, 22), and **in that** the ramp disks (10, 11) have support arms (23, 24) which are at a distance opposite one another.

12. Multi-disk brake according to one or a plurality of Claims 9 to 11, **characterized in that** the ramp disk (10, 11) has tapering grooves (27) for partially receiving balls (26).

13. Multi-disk brake according to one or a plurality of Claims 1 to 12, **characterized in that** the guide device (14) has guide pins (15) fastened in the housing (2).

14. Multi-disk brake according to one or a plurality of Claims 1 to 13, **characterized in that** the actuating mechanism/actuator (3) can be activated depending on the direction of rotation of the drive shaft (4).

## Revendications

1. Frein à disques (1) pour un véhicule automobile avec un arbre d'entraînement (4) rotatif et avec un appareil de guidage (14) fixe par rapport à l'arbre d'entraînement (4), avec un agencement de disques/paquet de disques (7, 8), comprenant des plaques de garniture (12) agencées en alternance et avec des plaques intermédiaires (13), les plaques de garniture (12) étant reliées de manière solidaire en rotation à l'arbre d'entraînement (4) ou à l'appareil de guidage (14) et les plaques intermédiaires (13) étant reliées de manière solidaire en rotation à l'autre composant respectif parmi l'appareil de guidage (14) ou l'arbre d'entraînement (4), comprenant en outre un appareil d'actionnement, à savoir une unité de rampe (9) pour l'actionnement/la précontrainte de l'agencement de disques/du paquet de disques (7, 8) ainsi qu'avec un dispositif de réglage/actionneur (3) pour l'actionnement et/ou la libération de l'appareil d'actionnement (9), le dispositif de réglage/actionneur (3) présentant un entraînement électrique (16), **caractérisé en ce que** l'appareil de guidage (14) est relié de manière solidaire en rotation à un boîtier (2) et **en ce que** le boîtier (2) est conçu de manière à être ouvert vers une transmission (6) du véhicule automobile, de telle sorte que la lubrification à l'huile de la transmission (6) est prévue pour le refroidissement du frein à disques (1).

2. Frein à disques selon la revendication 1, **caractérisé en ce que** l'entraînement électrique (16) est réalisé sous forme d'entraînement rotatif à direction de rotation réversible avec un arbre rotatif.

3. Frein à disques selon la revendication 1 ou 2, **caractérisé en ce que** l'entraînement électrique (16) a un moteur électrique (25) avec un pignon (18) monté pivotant, pouvant être entraîné par le moteur électrique (25), et le pignon (18) supporte un élément de levier (19) ou un élément de came.

4. Frein à disques selon la revendication 3, **caractérisé en ce que** l'élément de levier (19) a un palier à roulement (20) et **en ce que** le palier à roulement (20) fait face à un bras de commande (21, 22) de l'unité de rampe (9).

5. Frein à disques selon la revendication 3 ou 4, **caractérisé en ce que** le pignon (18) est réalisé sous forme de segment denté.

6. Frein à disques selon une ou plusieurs des revendications 1 à 5, **caractérisé en ce que** l'entraînement électrique (16) a un appareil de frein de stationnement (28) commandable et **en ce que** l'appareil de frein de stationnement (28) bloque ou libère au choix l'appareil d'actionnement, tel que notamment une unité de rampe (9), dans la position réglée par l'actionneur (3).

7. Frein à disques selon la revendication 6, **caractérisé en ce que** l'appareil de frein de stationnement (28) a une roue à rochet (29) commandable de manière électromagnétique et **en ce que** la roue à rochet (29) est en prise avec l'entraînement électrique (16).

8. Frein à disques selon les revendications 3 et 6, **caractérisé en ce que** l'appareil de frein de stationnement (28) a une roue à rochet (29) commandable de manière électromagnétique et **en ce que** la roue à rochet (29) est en prise avec le pignon (18).

9. Frein à disques selon une ou plusieurs des revendications 1 à 8, **caractérisé en ce que** l'appareil d'actionnement est réalisé sous forme d'unité de rampe (9) et a une plaque de rampe (10, 11) rotative qui s'appuie sur le paquet de disques (7, 8), **en ce que** la plaque de rampe (10, 11) peut être déplacée dans la direction axiale lors d'une rotation en fonction de la position de rotation et **en ce que** l'actionneur (3) est réalisé pour faire tourner la plaque de rampe (10, 11).

10. Frein à disques selon la revendication 9, **caractérisé en ce que** l'unité de rampe (9) a deux plaques de rampe (10, 11) agencées entre deux paquets de disques (7, 8) et **en ce qu'**une plaque de rampe (10) peut être entraînée dans une direction et l'autre plaque de rampe (11) peut être entraînée dans l'autre direction pour un déplacement dans la direction axiale.

11. Frein à disques selon les revendications 3 + 10, **caractérisé en ce que** les plaques de rampe (10, 11) présentent chacune un bras de commande (21, 22), **en ce que** l'élément de levier (19) est agencé entre les bras de commande (21, 22) et **en ce que** les plaques de rampe (10, 11) présentent des bras d'appui (23, 24) opposés à distance.

12. Frein à disques selon une ou plusieurs des revendications 9 à 11, **caractérisé en ce que** la plaque de rampe (10, 11) a des rainures (27) qui se rétrécissent pour recevoir partiellement des billes (26).

13. Frein à disques selon une ou plusieurs des revendications 1 à 12, **caractérisé en ce que** l'appareil de guidage (14) a des boulons de guidage (15) fixés dans le boîtier (2).

14. Frein à disques selon une ou plusieurs des revendications 1 à 13, **caractérisé en ce que** le dispositif de réglage/actionneur (3) peut être commandé en fonction de la direction de rotation de l'arbre d'entraînement (4).
